# EUROPEAN PATENT APPLICATION

(11) **EP 1 148 473 A2**
(43) Date of publication of application: **24.10.2001**
(21) Application number: 01108869.7
(22) Date of filing: 09.04.2001
(51) Int. Cl.: G11B 5/127, G11B 5/187, G11B 5/012

(54) **Method and apparatus for perpendicular magnetic recording**

(30) Priority: 10.04.2000 US 195759 P
(71) Applicant: SAMSUNG ELECTRONICS CO., LTD., Suwon-City, Kyungki-do (KR)
(72) Inventor: Kim, Yong-su, Gangnam-gu, Seoul (KR); Im, Young-hun, Songpa-gu, Seoul (KR)
(74) Representative: Grünecker, Kinkeldey, Stockmair & Schwanhäusser Anwaltssozietät

(57) **Abstract**

The present invention comprises a method and apparatus for magnetizing the surface of a disk (502). In particular, the apparatus comprises a write head (800) which writes to a disk surface using a perpendicular recording process. The write head includes a leading pole (830) and a trailing pole, where the trailing pole (820) has a recessed portion (840) along its trailing edge. This recessed portion leads to an improved magnetic field gradient across the write head, thereby enabling a higher bit density during the write process.

## Description

### BACKGROUND OF INVENTION

### 1. Field of Invention

The present invention generally relates to magnetic recording and more particularly to a method and apparatus for perpendicular magnetic recording in a hard drive assembly.

### 2. Description of Related Art

Disk drives are used to store electronic information. The information is typically recorded on concentric tracks on either surface of one or more magnetic recording disks. To facilitate the storage and retrieval of data in an orderly manner, disks are typically organized in blocks called sectors. These sectors are identified by cylinder (or track), head and sector numbers. The disks are rotatably mounted to a spin motor and information is accessed by means of read/write heads. The heads are mounted to actuator arms that are moved across the disk by a voice coil motor (VCM). The VCM is excited with a current to rotate the actuator and move the heads.

There are various types of magnetic recording heads, including magneto-resistive ("MR") and giant magnetoresistive ("GMR") heads. Magnetoresistive (MR) head technology has been introduced to improve the writing and reading performance of heads used in magnetic random-access storage assemblies. MR and GMR heads contain a write element for magnetizing a corresponding disk surface and a separate read element for sensing the magnetic fields of the disks. The heads are connected to electrical circuits that excite the write elements and sense a voltage across the read elements.

The write element of an MR head typically consists of two magnetic poles typically made of a soft magnetic material. The two magnetic-poles are typically connected at the far end away from the disk surface. A coiled copper wire runs between the poles to produce a magnetic field when supplied with an electrical current.

A fundamental constraint on the continuing evolution of magnetic-media data storage has been the achievable data density on the surface of the storage media. While substantial increases in data densities have been recently achieved, there is a continuing need for increased data densities to reduce component power consumption and increase performance speeds for the next generation of data storage devices. While data density may be affected by numerous factors, the design of the head assembly has been recognized as central to increasing data densities. For example, increases in data densities were experienced with the introduction of MR heads. However, even this dual read/write element structure is limited in the data density it can create because of inherent limitations in the magnetic field gradient it produces. Similarly, while efforts devoted to reducing the size of the write and read elements produced some benefits, inherent physical limitations limited these benefits.

Typically, data is written to a sector through either a perpendicular or a longitudinal recording process. With longitudinal recording, magnetization is oriented primarily in the same plane as the medium which is being magnetized, whereas with perpendicular recording magnetization is oriented primarily perpendicular to the disk surface. Perpendicular is generally considered superior to longitudinal recording due to the fact that the opposing poles of the magnetized surface lie adjacent to each other and serve to reinforce the magnetic polarities of one another. With longitudinal recording, on the other hand, poles of the same magnetic orientation lie next to one another and serve only to demagnetize each other. Thus, perpendicular recording is generally thought to produce smaller magnetized units and, hence, high data densities.

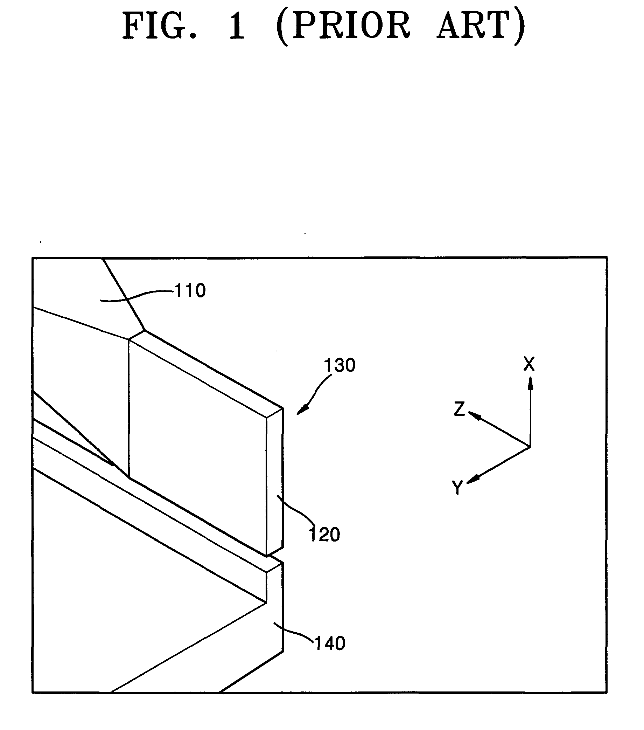

Referring now to Figure 1 in which a conventional write head 110 as used in the prior art is depicted having the orientation shown in an X-Y-Z coordinate system. The head has a top pole 120 and a bottom pole 140, across which a magnetic field is produced. In addition, the disk surface moves across the head in the X direction during read/write operations. As is known in the art, one of the primary limitations of the conventional head design is that the trailing edge 130 generates a relatively low magnetic field gradient, particularly for perpendicular recording systems. This is significant since, as is explained in more detail below, the lower the magnetic field gradient on the trailing edge 130, the weaker the resulting magnetization is and the lower the resulting bit density will be.

Generally speaking, as bit density increases, the bit patterns on a disk surface grow smaller. Moreover, increasing the bit density will reduce the signal detected by the read element. To this end, several techniques have been employed to help counter the diminishing signal strength effect. For example, attempts to fly the write/read head closer to the disk surface or add more turns (the number of wraps of copper wire that is coiled around the magnetic core of the write head) have been made. However, reducing the fly height of the head may decrease the stability of the system, while adding more turns increases the head inductance which reduces the speed of the write operations.

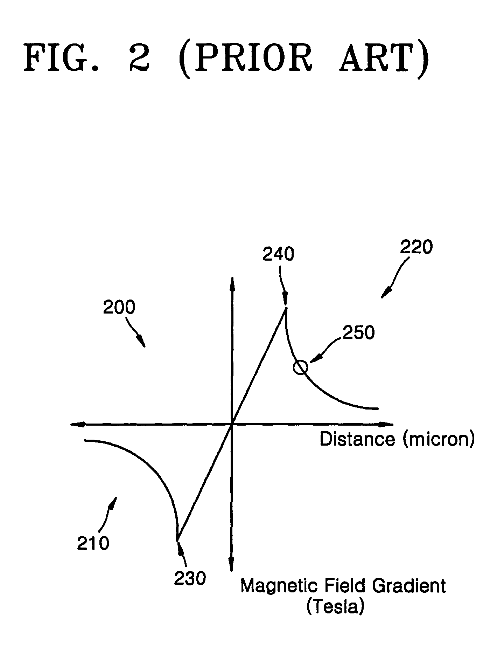

Figure 2 depicts a plot 200 of the magnetic field gradient over the length of a conventional write head 110. In particular, it illustrates the fact that in a conventional perpendicular write head, a disk surface is magnetized first on the lead pole side 210 and then again with an opposite field on the trailing pole side 220. Point 230 corresponds with the peak magnetic field for the lead pole side 210. Point 230 occurs at approximately the trailing end of the lead pole (i.e. the side of the lead pole adjacent to the gap). In turn, point 240 corresponds with the peak magnetic field for the trailing pole side 220 which occurs near the side of the trailing pole which is adjacent to the gap. As the disk surface encounters the lead pole it is magnetized on the lead pole side 210. It is then re-magnetized with a field of the opposite polarity on the trailing pole side 220. Point 250 is the magnetic transition point which is the point at which the disk surface is re-magnetized. However, the slope of the magnetic field gradient affects the ability of the write head to proceed to the next write operation, and hence the write length required. In particular, the steeper the slope of the magnetic field gradient along the trailing edge, the sooner the write head can begin the next write operation. Thus, one aspect of the present invention is to reduce this required write length by increasing the magnitude of the slope of the magnetic field gradient along the trailing edge of a write operation.

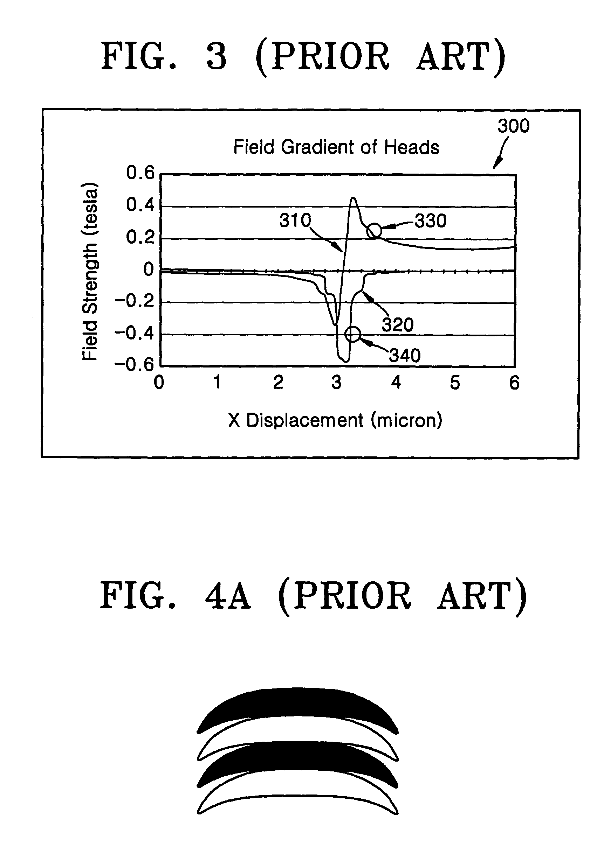

Referring now to Figure 3 which depicts a plot 300 of the magnetic field gradient of the conventional write head 110 of Figure 1. The X-axis of Figure 3 coincides with the position (X) along the length of a conventional write head where X=0 is the front edge of the bottom pole 6 and X=6 is the trailing edge of the top pole 120. Plot 310 illustrates the field gradient across a conventional write head 110 for perpendicular recording. Plot 320 illustrates the field gradient across a conventional write head 110 for longitudinal recording. Point 330 corresponds to the field strength at the point of writing which, for perpendicular recording, is the trailing edge of top pole 120. In turn, point 340 corresponds to the field strength at the point of writing for longitudinal recording which occurs at the trailing edge of the head gap. Note the residual magnetic field along the trailing edge of the write head.

As depicted in Figure 3, the bottom pole 140 extends from X=0 to X=3 microns. The gap between the bottom pole 140 and top pole 120 extends from X=3 to X=3.15 microns and the top pole extends from X=3.15 to X=6.15 microns.

As mentioned above, one of the previous method for increasing bit density was to decrease the size of the write head. However, the amount by which the write head can be reduced is limited by effects on the resulting bit pattern produced. In particular, Figure 4A illustrates the bit pattern which results when the width of the conventional write head 110 has been decreased beyond some limiting value. This horseshoe bit pattern negatively affects the read head sensitivity by introducing additional noise into the reading process. Thus, to avoid errors during the reading process, the conventional write head 110 width must be kept above some threshold value which, in turn, limits the bit density which the write head can produce.

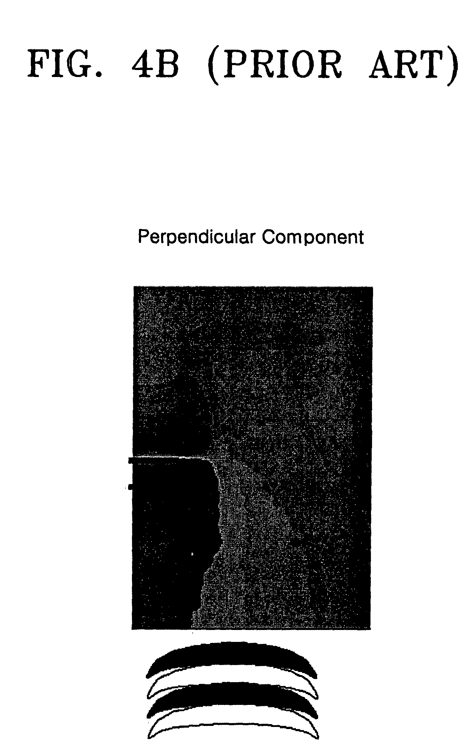

Referring now to Figure 4B, a cross-section of one side of the bit pattern generated on a disk surface using a conventional write head is depicted. In particular, Figure 4B illustrates the perpendicular component of a bit pattern produced by a conventional write head where the noise-producing horseshoe bit pattern shape is clearly visible.

Current high-quality systems require virtually error-free recording and reproduction of the input signal of the recorder (e.g., number of missing data bits less than 1*10⁻⁶). Thus, it is extremely desirable to have the highest possible areal recording density (number of tracks per unit width) times the linear recording density (number of bits per unit length). Similarly, it is also desirable to maximize the rate at which the number of data bits can be read per unit time. Accordingly, there is a need for an improved method and apparatus which is capable of producing a higher bit density on a magnetic disk surface, while not compromising read time.

### BRIEF SUMMARY OF INVENTION

One embodiment of the present invention comprises a method and apparatus for magnetizing the surface of a disk. The apparatus comprises a head for use in magnetizing a surface of a disk where the disk has a plurality of tracks, and a write element to produce a magnetic field in a direction substantially perpendicular to the surface, said write element including a top pole and a bottom pole, said top pole having a first width and a second width, said second width being smaller than said first width where said second width is closer to the disk surface than the first width. In one embodiment, the second width is less than 0.6 microns.

### BRIEF DESCRIPTION OF DRAWINGS

Figure 1 illustrates a conventional write head.

Figure 2 graphical representation of a magnetic field gradient produced by a conventional write head.

Figure 3 is a graph of magnetic field gradients of a conventional write head.

Figure 4A is a graphical representation of the bit pattern produced by a conventional write head.

Figure 4B is another graphical representation of the but pattern produced by a conventional write head

Figure 5 is a top view of an embodiment of a hard disk drive of the present invention.

Figure 6 is a schematic of an electrical system which controls the hard disk drive.

Figure 7 illustrates the layout of a typical sector of the disk in a hard disk drive.

Figure 8 illustrates a write head according to one embodiment of the present invention.

Figure 9 provides examples of top pole configurations consistent with the present invention.

Figure 10 depicts a cross-section of a write head consistent with the present invention.

Figure 11 is a graphical representation of the bit patterns produced by a write head according to one embodiment of the present invention.

Figure 12 is a graph of magnetic field gradients across a write head according to one embodiment.

Figure 13 is a plot of several magnetic field gradients produced by write heads configured according to embodiments of the present invention.

### DETAILED DESCRIPTION OF THE INVENTION

The present invention provides a method and apparatus for increasing the bit density on a disk in a hard disk drive by altering the configuration of the write head. As used herein, bit density refers to the number of data bits per unit area on a disk surface. To this end, one aspect of the present invention seeks to alter the trailing edge of the top pole of a writing head to produce a corresponding change in the slope of the magnetic field gradient across the trailing edge of the write head. This change in the shape of the magnetic field gradient serves to directly decrease the write length needed for magnetization which, in turn, makes it possible to produce a higher bit density. In one embodiment, a recessed area is introduced on the trailing edge of the top pole of the write head. While this trailing edge recess may take on a plurality of configurations, it typically will involve removing some portion of the end of the top pole such that the section of the top pole adjacent to the disk surface has a width adjacent to the disk surface of no more than 0.6 microns. In one embodiment, this recessed portion of the top pole is removed using a focused ion beam process. In another embodiment, the altered writing head is used in a perpendicular magnetic recording process in a hard disk drive assembly. Finally, the top pole is sometimes referred to herein as the trailing pole, while the bottom pole will sometimes be referred to as the leading pole.

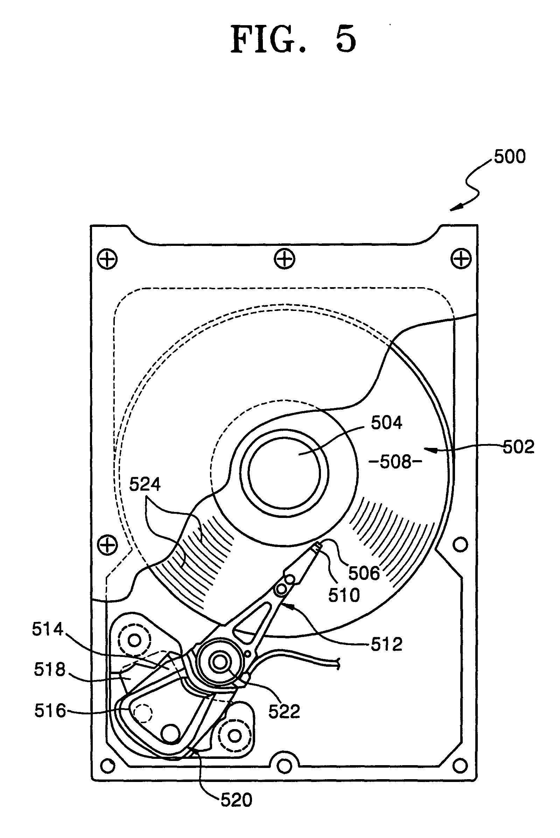

Referring to the drawings more particularly by reference numbers, Figure 5 shows an embodiment of a hard disk drive 500. The drive 500 includes at least one magnetic disk 502 that is rotated by a spindle motor 504. The drive 500 may also include a transducer 506 located adjacent to a disk surface 508.

The transducer 506 can write and read information on the rotating disk 502 by magnetizing and sensing the magnetic field of the disk 502, respectively. There is typically a transducer 506 associated with each disk surface 508. Although a single transducer 506 is shown and described, it is to be understood that there may be a write transducer for magnetizing the disk 502 and a separate read transducer for sensing the magnetic field of the disk 502. The read transducer may be constructed from a magneto-resistive (MR) material. Some heads contain a magneto-resistive (MR) material that is used to sense the magnetic field of the disks. The resistance of the magneto-resistive material will vary linearly with variations in the magnetic field. The magneto-resistive material is coupled to a current source. Variations in the magnetic field of the disk will cause a corresponding change in the magneto-resistive resistance and the voltage sensed across the magneto-resistive element. MR heads typically have a higher bit density than other types of disk drive heads.

The transducer 506 can be integrated into a slider 510. The slider 510 may be constructed to create an air bearing between the transducer 506 and the disk surface 508. The slider 510 may be incorporated into a head gimbal assembly (HGA) 512. The HGA 512 may be attached to an actuator arm 514 which has a voice coil 516. The voice coil 516 may be located adjacent to a magnet assembly 518 to define a voice coil motor (VCM) 520. Providing a current to the voice coil 516 will generate a torque that rotates the actuator arm 514 about a bearing assembly 522. Rotation of the actuator arm 514 will move the transducer 506 across the disk surface 508.

Information is typically stored within annular tracks 524 of the disk 502. Each track 524 typically contains a plurality of sectors. Each sector may include a data field and an identification field. The identification field may contain Gray code information which identifies the sector and track (cylinder). The transducer 506 is moved across the disk surface 508 to write or read information on a different track. Moving the transducer to access a different track is commonly referred to as a seek routine.

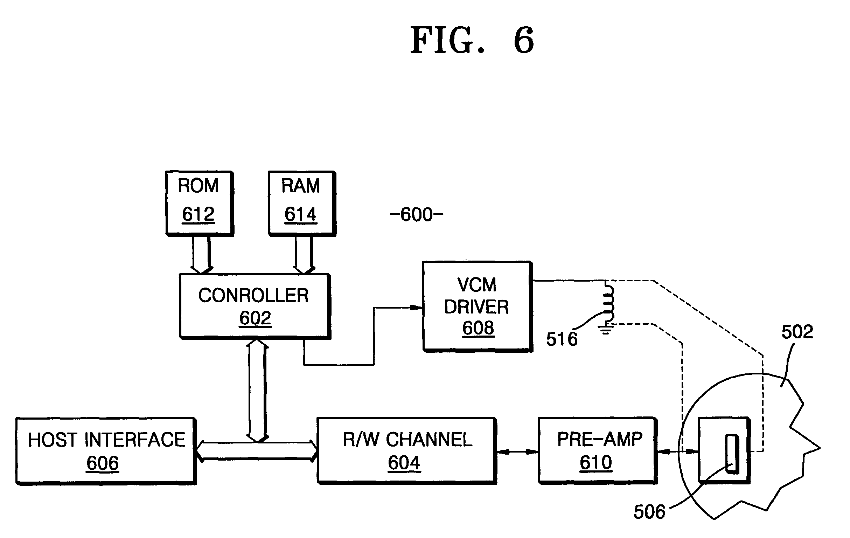

Figure 6 shows an electrical system 600 which can control the hard disk drive 500. The system 600 may include a controller 602 that is coupled to the transducer 506 by a read/write (R/W) channel circuit 604 and a pre-amplifier circuit 610. The controller 602 may be a digital signal processor (DSP), microprocessor, microcontroller, and the like. The controller 602 can provide control signals to the read/write channel 604 to read from the disk 502 or write information to the disk 502. The information is typically transferred from the R/W channel 604 to a host interface circuit 606. The host circuit 606 may include buffer memory and control circuitry which allow the disk drive to interface with a system such as a personal computer.

The controller 602 may also be coupled to a VCM driver circuit 608 which provides a driving current to the voice coil 516. The controller 602 may provide control signals to the driver circuit 608 to control the excitation of the VCM and the movement of the transducer 506.

The controller 602 may be connected to a non-volatile memory such as a read only memory (ROM) or flash memory device 612, and a random access memory (RAM) device 614. The memory devices 612 and 614 may contain instructions and data that are used by the controller 602 to perform software routines. Alternatively, the instructions and data may be stored on a disk 502. One of the software routines may be a seek routine to move the transducer 506 from one track to another track. The seek routine may include a servo control routine to insure that the transducer 506 moves to the correct track.

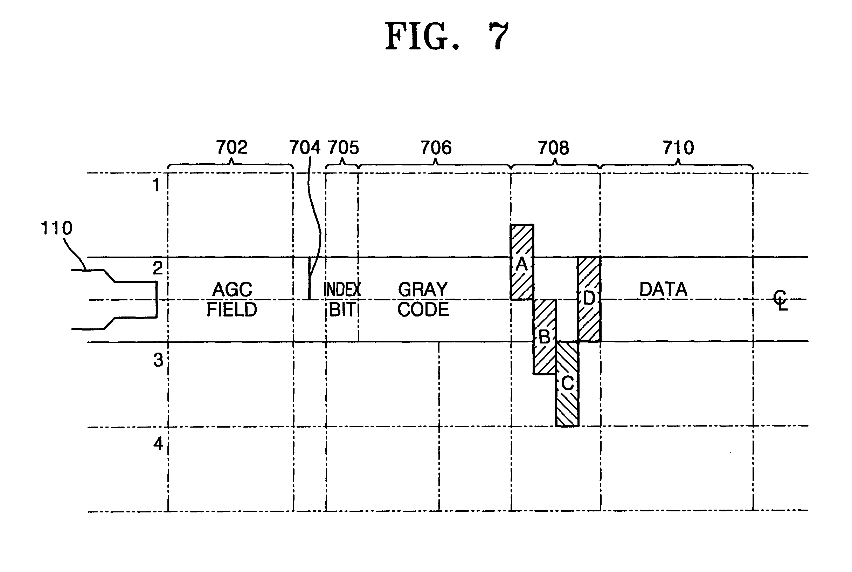

As shown in Figure 7, data is typically stored within sectors of radially concentric tracks located across disk 502. A typical sector will have an automatic gain control (AGC) field 702, a synchronization (sync) field 704, an index bit field 705 that defines the sector, a Gray code field 706 that identifies the track, a servo field 708 which includes a number of servo bits A, B, C, D, and a data field 710 which contains data. A sector may further include an error correction field (not shown). In operation, the head 110 is moved to a track and the servo information provided in servo field 708 is read and provided to the electrical system 600.

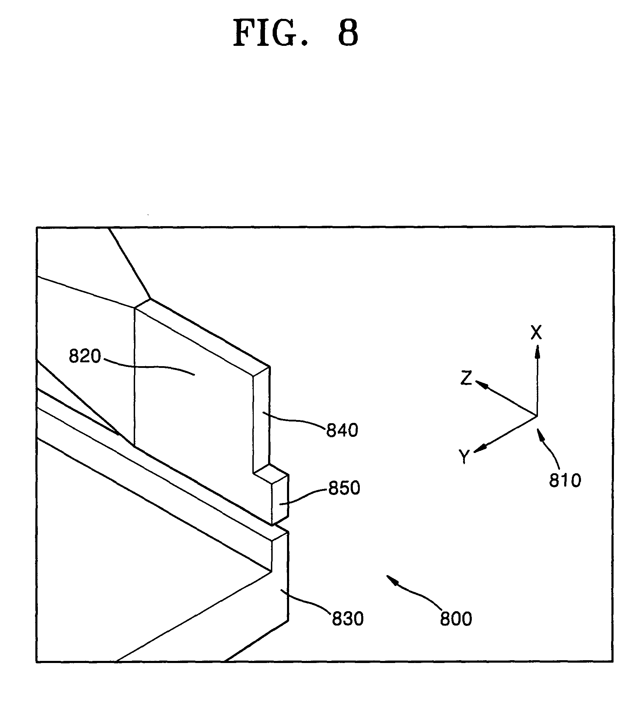

Figure 8 depicts a write head 800, according to one embodiment of the present invention, having an orientation in an X-Y-Z coordinate system. As with the conventional head of Figure 1, the write head of Figure 8 includes a top pole 820 and a bottom pole 830. However, in this embodiment, the top pole contains a recessed portion 840, and a non-recessed portion 850. In this embodiment, the recessed portion is at the trailing edge of the top pole 820. In one embodiment, the recessed portion has a depth along the Z-axis of between 0.6 and 1.0 microns, which represents an acceptable range to avoid flux density saturation. In addition the non-recessed portion 850 has a width associated with it along the X-axis (i.e., top pole thickness in Figure 8). In one embodiment, this width of the non-recessed portion 850 has a width along the X-axis of between 0.2 microns and 0.6 microns. In another embodiment, this width is approximately 0.2 microns, while in yet another embodiment, this width is approximately 0.5 microns. When the width of the non-recessed portion drops below 0.2 microns, the effects of thermal degradation become non-negligible. Similarly, as the width of the non-recessed portion approaches 0.6 microns the head 800 begins to revert back to exhibiting the magnetic field characteristics of a conventional head 110. It should also be noted that the non-recessed portion 850 may be referred to herein as the pole tip.

One aspect of the present invention seeks to shorten the magnetization length by introducing a recessed portion 840 on the top pole 820. As used herein, magnetization length refers to the length across the disk surface which the write head requires to complete one full write operation and begin a second write operation. Shortening the magnetization length is critical to increasing the bit density since magnetization length is inversely proportional to bit density.

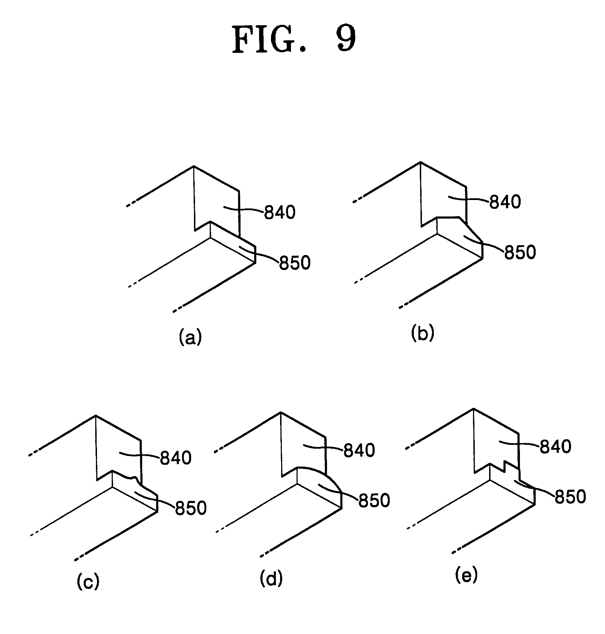

While Figure 8 depicts a recessed portion 840 according to one embodiment, it should be appreciated that other configurations of recessed portions may be used. By way of non-limiting examples, Figure 9 illustrates five non-limiting examples of top pole tip configurations, each having a recessed portion 840 and a non-recessed portion 850 (i.e., pole tip). It should also be noted that the top pole 820 of the present invention may be formed using a trimming process with a focused ion beam (FIB), as is well known in the art.

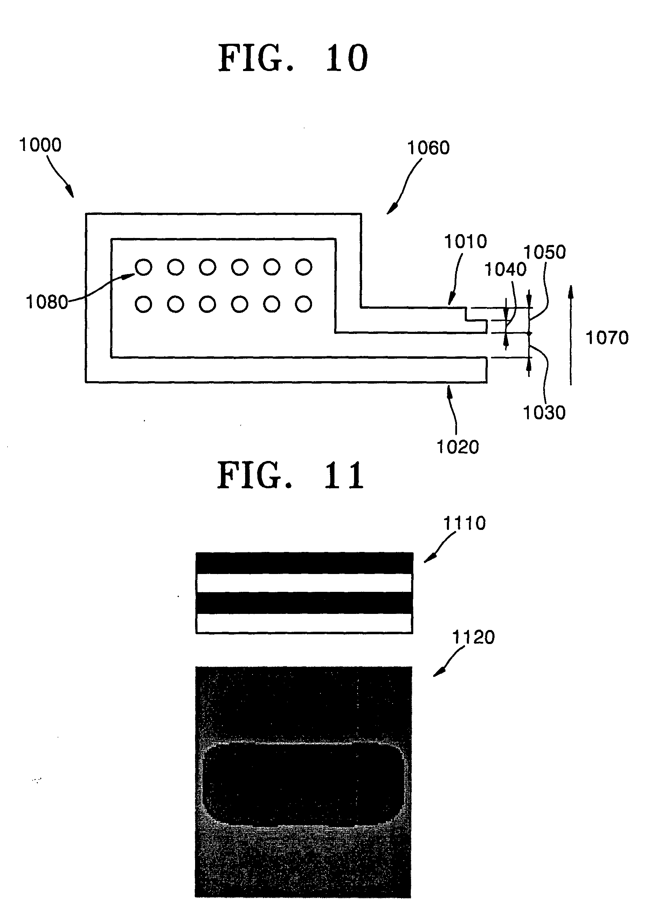

Figure 10 illustrates a simplified cross-section of a write head 1000, according to one embodiment of the present invention. In particular, top pole 1010 is shown having a pole tip consistent with the present invention. In particular, top pole 1010 is shown as having an upper width 1050 which is greater than the lower width 1040. Bottom pole 1020 is shown with a gap 1030 separating the two poles. In addition, top pole 1010 is shown as having its non-recessed portion (i.e., pole tip) adjacent to both the disk surface and gap 1030. In this embodiment, the upper part of the top pole 1010 having a width 1050 is shown as being attached to the pole yoke 1060. It should further be noted that the width of the upper portion of the top pole 1050 minus the width of the pole tip 1040 will equal the non-recessed width which is oriented along the trailing edge of the top pole 1010.

Arrow 1070 illustrates the direction the disk surface is moving across the write head 1000 during a recording operation. Based on this orientation, bottom pole 1020 is the leading pole, while top pole 1010 is the trailing pole. Moreover, write head 1000 includes copper coils 1080₁-1080ᵢ which are used to generate a magnetic field across top pole 1010 and bottom pole 1020.

It should further be noted that one aspect of the present invention is to avoid the noise-generating horseshoe bit pattern produced by various conventional write heads as depicted previously in Figure 4A and 4B. In particular, according to one embodiment of the present invention, patterns 1110 and 1120 depict the bit pattern generated by a write head having a configuration consistent with the present invention.

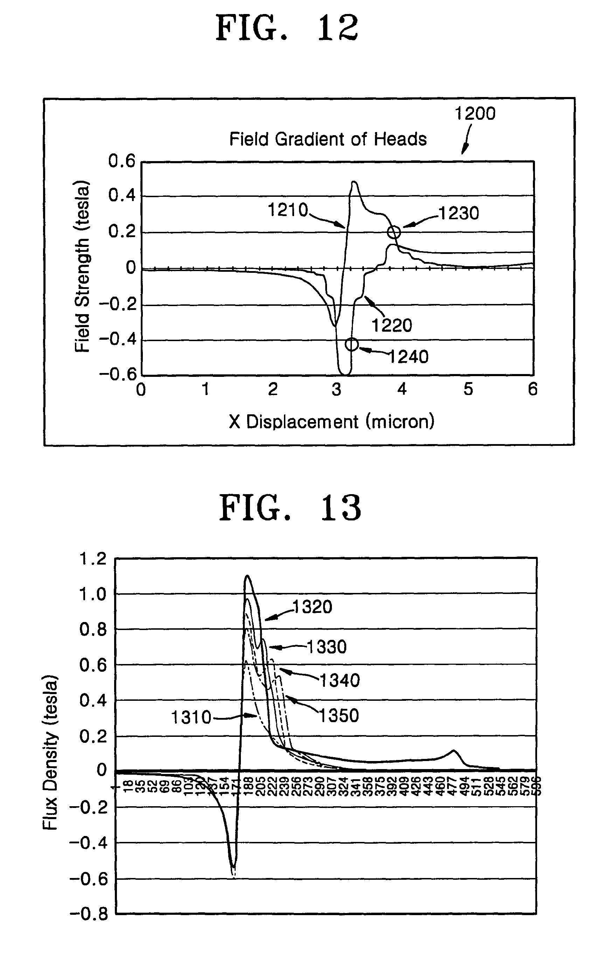

Referring now to Figure 12 which depicts a plot of the field gradient of a write head, according to one embodiment. By way of a non-limiting example, the field strengths plotted on Figure 12 correspond to a top pole 820 having a pole tip thickness of 0.5 microns. This would mean then that, referring back to Figure 8, non-recessed portion 850 would have a width along the X-axis of 0.5 microns.

As with Figure 9, the X-axis of Figure 12 coincides with the position (X) along the length of a write head where the X=0 is the front edge of the bottom pole 830 and X=6 is the trailing edge of the top pole 820. Plot 1210 illustrates the magnetic field gradient across the write head 800, according to one embodiment of the present invention, for perpendicular recording. Similarly, plot 1220 illustrates the field gradient across the write head 800 for longitudinal recording. Point 1230 corresponds to the field strength at the point of writing which, for perpendicular recording, is the trailing edge of top pole 1220. In turn, point 1240 corresponds to the field strength at the point of writing for longitudinal recording which occurs at the trailing edge of the head gap.

By way of a non-limiting example, the write head of Figure 12 is shown with the bottom pole 830 extending from X=0 to X=3 microns. The gap between the bottom pole 830 and top pole 820 extends from X=3 to X=3.15 microns and the top pole extends from X=3.15 to X=6.15 microns.

A comparison of Figure 3 with Figure 12 shows that, particularly for perpendicular recording (1210), the top pole 820 configuration used in Figure 12 generates superior field gradient characteristics along the trailing side of the write head than the conventional top pole 120 configuration used to generate the plot of Figure 3.

Figure 13 illustrates more clearly the dynamic relationship between the width of the non-recessed portion 850 of a top pole 820 and the resulting shape of the magnetic field gradient, along some unit length of the write head (X-axis). Moreover, Figure 13 illustrates that not only does the magnitude of the magnetic field across the write head 800 increase by varying the width of the non-recessed portion 850 (i.e., pole tip), the slope of the gradient along the trailing edge of the head is similarly affected. In particular, the magnitude of the negative slope increases as the size of the non-recessed portion decreases. Specifically, plot 1310 corresponds to the magnetic flux density generated by a conventional top pole 120 configuration. Plot 1320 corresponds to the magnetic flux density generated by a write head 820 having a non-recessed portion 850 with a 0.2 micron width. The non-recessed portion 850 in plot 1330 is 0.3 microns. The width of the non-recessed portion 850 for plot 1340 is 0.4 microns, and the width of the non-recessed portion 850 for plot 1350 is 0.5 microns. Thus, Figure 13 illustrates that as the width of the non-recessed portion 850 approaches 0.2 microns, the flux density increases, thereby shortening the required write length which, in turn, enables the write head to produce a higher bit density. Figure 13 also highlights the fact that as the pole tip (i.e., non-recessed portion 850) approaches 0.6 microns, the magnetic field gradient produced by the head approaches the pattern exhibited by conventional write heads 110.

Although the present invention has been described in terms of certain preferred embodiments, other embodiments apparent to those of ordinary skill in the art are also within the scope of this invention. Accordingly, the scope of the invention is intended to be defined only by the claims which follow.

## Claims

1. A head for use in magnetizing a disk surface of a disk, said disk having a plurality of tracks, comprising:
a write element to produce a magnetic field in a direction substantially perpendicular to said disk surface, said write element including a top pole and a bottom pole, said top pole having a first width and a second width, said second width being smaller than said first width where said second width is closer to the disk surface than said first width.

2. The head of claim 1, wherein the top pole and the bottom pole are separated by a gap, said top pole and bottom pole to provide a magnetic field across said gap.

3. The head of claim 2, wherein said top pole includes a recessed portion and a non-recessed portion, said non-recessed portion having a width equal to said second width, said non-recessed portion being adjacent to said gap.

4. The head of any of the claims 1 to 3, wherein said second width is less than 0.6 microns.

5. The head of claim 3 or 4, wherein said non-recessed portion has a linear edge and a nonlinear edge, said linear edge to be adjacent to said bottom pole, said nonlinear edge to be parallel to said linear edge.

6. The head of any of the claims 3 to 5, wherein said second width is between 0.2 and 0.6 microns.

7. The head of any of the claims 3 to 6, wherein said recessed portion has a depth of between 0.6 and 1.0 microns.

8. The head of any of claims 1 to 7, wherein said first width is between 0.6 and 1.0 microns further from said disk surface than said second width.

9. A write head to magnetize a disk surface of a disk in a hard disk drive, comprising:
a top pole including an upper portion having a first width and a lower portion, said lower portion defining a pole tip having a second width, said second width being smaller than said first width; and
a bottom pole separated from the top pole, said top pole having an orientation substantially parallel to the bottom pole, said bottom pole and top pole defining a gap there between, said gap having a magnetic field provided by the bottom pole and the top pole, said magnetic field to have a orientation substantially perpendicular to said disk surface.

10. The write head of claim 9, wherein the second width is less than 0.6 microns

11. The write head of claim 9 or 10, wherein the magnetic field has a density which increases as it passes through said pole tip.

12. The write head of claim 10 or 11, wherein the second width is between 0.2 and 0.5 microns.

13. The write head of any of the claims 9 to 12, wherein the write head further comprises:
a magnetic gradient having a negative slope across said top pole, said magnetic gradient to be a function of the magnetic field, said slope to become more negative as the second width decreases from 0.6 microns to 0.2 microns.

14. A method of magnetizing a surface of a magnetic disk in a hard disk drive, comprising:
moving a head to a track of a disk, the head having a coil coupled to a magnetic core, the magnetic core having a top pole and a bottom pole;
exciting the coil to produce a magnetic field across a gap between the top pole and the bottom pole, said magnetic field to have a substantially perpendicular orientation, said gap defining a distance between the top pole and the bottom pole, said top pole having a first width and a second width, said second width to be adjacent to said gap, said second width to be less than said first width, said second width to be adjacent to said surface; and
exposing said disk surface to said magnetic field over a write length.

15. The method of claim 14, wherein exciting the coil to produce the magnetic field between the top pole and the bottom pole comprises, exciting the coil to produce the magnetic field between the top pole and the bottom pole where said top pole has a first width and a second width that is less than 0.6 microns.

16. The method of claim 14 or 15, wherein exciting the coil to produce the magnetic field between the top pole and the bottom pole comprises, exciting the coil to produce the magnetic field between the top pole and the bottom pole, said top pole having a first width and a second width, said second width defining a non-recessed portion having a width between 0.2 and 0.6 microns.

17. The method of any of the claims 14 to 16, wherein exciting the coil to produce the magnetic field between the top pole and the bottom pole comprises, exciting the coil to produce the magnetic field between the top pole and the bottom pole, said top pole having a first width and a second width, said first width being between 0.6 microns and 1.0 microns further from the disk surface than said second width.

18. The method of any of the claims 14 to 17, further comprising:
producing a magnetic gradient having a negative slope across said top pole, said magnetic gradient to be a function of the magnetic field, said slope to become more negative as said second width decreases from 0.6 microns to 0.2 microns.

19. The method of any of the claims 14 to 18, wherein the write length decreases as the second width decreases from 0.6 microns to 0.2 microns.

20. A hard disk drive, comprising:
a housing;
an actuator arm;
a disk attached to a spin motor, said disk having a plurality of tracks, said tracks including data;
a head mounted to said actuator arm, said head to produce a magnetic field having an orientation substantially perpendicular to said disk, said head to include a top pole and a bottom pole, said top pole having an upper portion and a pole tip, said upper portion having a first width and said pole tip having a second width, said second width being smaller than said first width; and
a controller coupled to said head to control the writing and reading of said data on said tracks.

21. The hard disk drive of claim 20, wherein said top pole and bottom pole are separated by a gap, said magnetic field to transverse said gap between said top pole and bottom pole, said second width of said top pole being less than 0.6 microns.

22. The hard disk drive of claim 20 or 21, wherein said upper portion is between 0.6 to 1.0 microns further from said disk than said pole tip.

23. A method of magnetizing a surface of a magnetic disk in a hard disk drive, comprising:
moving a head to a track of a disk, the head having a coil coupled to a magnetic core, the magnetic core having a top pole and a bottom pole;
exciting the coil to produce a magnetic field across a gap between the top pole and the bottom pole, said magnetic field to have a substantially perpendicular orientation, said gap defining a distance between the top pole and the bottom pole, said top pole having an upper portion and a pole tip, said pole tip to be adjacent to said gap, said upper portion having a first width and said pole tip having a second width, said second width being less than said first width, said pole tip to be adjacent to said surface; and
exposing said disk surface to said magnetic field over a write length.

24. The method of claim 23 further comprising:
reducing said write length by reducing the second width of the top pole to between 0.2 microns and 0.6 microns.

25. A head for use in magnetizing a disk surface of a disk, said disk having a plurality of tracks, comprising:
a write element to produce a magnetic field in a direction substantially perpendicular to said disk surface, said write element including a top pole and a bottom pole, said top pole having a recessed portion and a non-recessed portion.

26. The head of claim 25, wherein the top pole and the bottom pole are separated by a gap, said top pole and bottom pole to provide a magnetic field across said gap.

27. The head of claim 26, wherein said non-recessed portion is adjacent to said gap.

28. The head of any of the claims 25 to 27, wherein said non-recessed portion has a width of less than 0.6 microns.

29. The head of any of the claims 25 to 28, wherein said non-recessed portion has a linear edge and a nonlinear edge, said linear edge to be adjacent to said bottom pole, said nonlinear edge to be parallel to said linear edge.

30. The head of any of the claims 25 to 29, wherein the width of said non-recessed portion is between 0.2 and 0.6 microns.

31. The head of any of the claims 25 to 30, wherein said recessed portion has a depth of between 0.6 and 1.0 microns.

32. The head of any of the claims 25 to 31, wherein said recessed portion is between 0.6 and 1.0 microns further from said disk surface than said non-recessed portion.

33. A method of magnetizing a surface of a magnetic disk in a hard disk drive, comprising:
moving a head to a track of a disk, the head having a coil coupled to a magnetic core, the magnetic core having a top pole and a bottom pole;
exciting the coil to produce a magnetic field across a gap between the top pole and the bottom pole, said magnetic field to have a substantially perpendicular orientation, said gap defining a distance between the top pole and the bottom pole, said top pole having a recessed portion and a non-recessed portion, said non-recessed portion to be adjacent to said gap; and
exposing said disk surface to said magnetic field over a write length.

34. The method of claim 33, wherein exciting the coil to produce a magnetic field between the top pole and the bottom pole comprises, exciting the coil to produce a magnetic field between the top pole and the bottom pole where said top pole has a recessed portion and a non-recessed portion, said non-recessed portion having a width of less than 0.6 microns.

35. The method of claim 33 or 34, wherein exciting the coil to produce a magnetic field between the top pole and the bottom pole comprises, exciting the coil to produce a magnetic field between the top pole and the bottom pole where said top pole has a recessed portion and a non-recessed portion, said non-recessed portion having a width of between 0.2 and 0.6 microns.

36. The method of any of the claims 33 to 35, wherein exciting the coil to produce a magnetic field between the top pole and the bottom pole comprises, exciting the coil to produce a magnetic field between the top pole and the bottom pole where said top pole has a recessed portion and a non-recessed portion, said recessed portion having a depth of between 0.6 microns and 1.0 microns.

37. The method of any of the claims 33 to 36, further comprising:
producing a magnetic gradient having a magnitude, where the magnetic gradient is a function of the magnetic field, said magnitude to vary inversely with a width of said non-recessed portion, where the width varies between 0.2 and 0.6 microns.

38. The method of any of the claims 33 to 37, wherein the write length decreases as a width of the non-recessed portion decreases from 0.6 microns to 0.2 microns.
